Europäisches Patentamt

European Patent Office

Office européen des brevets

(11) Publication number: **0 246 899 B1**

# EUROPEAN PATENT SPECIFICATION

(45) Date of publication of patent specification: **11.09.91**    (51) Int. Cl.⁵: **G11B 7/00, G11B 7/085**

(21) Application number: **87304528.0**

(22) Date of filing: **21.05.87**

(54) **Optical information recording and reproducing apparatus.**

(30) Priority: **21.05.86 JP 114933/86**

(43) Date of publication of application:
**25.11.87 Bulletin 87/48**

(45) Publication of the grant of the patent:
**11.09.91 Bulletin 91/37**

(84) Designated Contracting States:
**DE FR GB IT NL**

(56) References cited:
**EP-A- 0 040 995**    **EP-A- 0 056 920**
**EP-A- 0 079 109**    **EP-A- 0 089 274**
**EP-A- 0 144 058**    **EP-A- 0 166 614**

(73) Proprietor: **CANON KABUSHIKI KAISHA**
**30-2, 3-chome, Shimomaruko, Ohta-ku**
**Tokyo(JP)**

(72) Inventor: **Kitai, Hiroto**
**32-5, Miyamae 3-chome**
**Suginami-ku Tokyo(JP)**
Inventor: **Shikichi, Satoshi**
**16-1-603 Tamagawa 2-chome**
**Ohta-ku Tokyo(JP)**
Inventor: **Hosoya, Hideki**
**3-262 Kosugi-cho Nakaharu-ku**
**Kawasaki-shi Kanagawa-ken(JP)**

(74) Representative: **Beresford, Keith Denis Lewis**
**et al**
**BERESFORD & Co. 2-5 Warwick Court High**
**Holborn**
**London WC1R 5DJ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an optical information recording and/or reproducing apparatus for recording information on an optical information recording medium, reproducing the information recorded on the medium and/or erasing the information recorded on the medium. Such an information recording and/or reproducing apparatus, for example, may use as recording medium a card-shaped information recording medium having a plurality of linear information tracks arranged in parallel.

Disk-shaped, card-shaped and tape-shaped optical recording media have been known. Of those, the card-shaped optical information recording medium (hereinafter referred to as an optical card) is compact and light in weight, convenient to carry and has a large memory capacity. Accordingly, a big demand is expected.

On such an optical card, information is recorded as a line of optically detectable record bits (information track) by scanning the card by a light beam which is modulated by recording information and focused into a small spot. In order to exactly record information without trouble such as crossing of information tracks, it is necessary to control (auto-tracking or AT) an irradiation position of the light beam spot on the optical card in a direction normal to the scan direction. In order to irradiate the light beam as a stable small spot irrespective of curvature of the optical card or mechanical tolerance, it is necessary to control (auto-focusing or AF) the light beam spot in a direction normal to the optical card surface. Further, in order to compensate for variation in a scan speed, it is necessary to have a clock signal. For reproduction, AT and AF are also required.

Accordingly, a tracking track, a clock track or other preformat is formed on the optical card in addition to the information track.

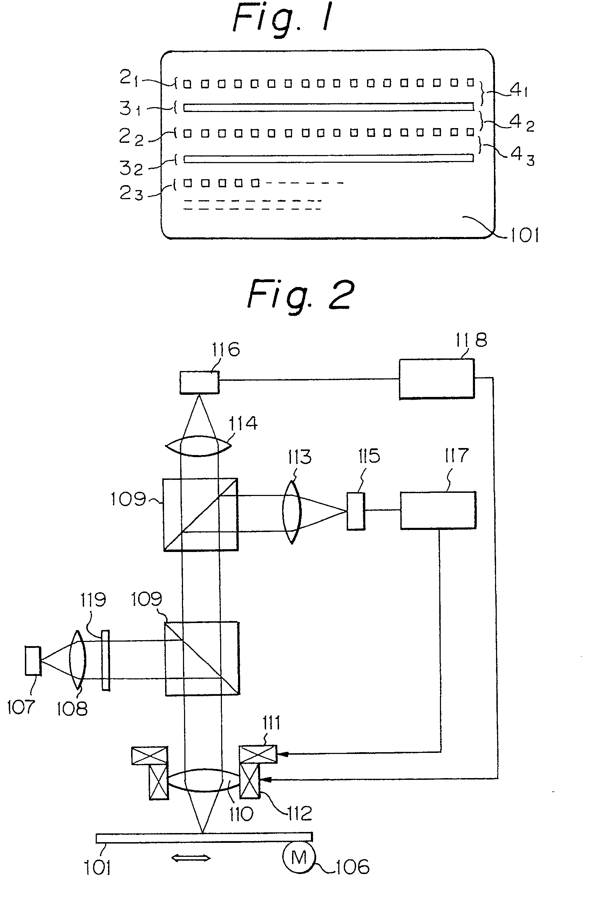

Fig. 1 shows a plan view of an optical card of known format. On an optical card 101, clock tracks 21, 22, 23, ... having clock signals recorded thereon to form discontinuous broken lines and tracking tracks 31, 32, 33, ... formed in continuous lines, are arranged alternately at a constant interval. Record areas 41, 42, 43, ... for recording information are provided one for each of the tracks. The optical card 101 has record areas between the clock tracks and the tracking tracks.

Fig. 2 shows a configuration of an optical card information recording and reproducing apparatus. Such apparatus is described, for example, in United Kingdom Patent Application No. 2170632. Numeral 106 denotes a motor for driving an optical card 101 in a direction shown by an arrow, numeral 107 denotes a light source such as a semiconductor laser, numeral 108 denotes a collimator lens, numeral 119 denotes a diffraction grating, numeral 110 denotes an objective lens, numeral 109 denotes a beam splitter, numeral 111 denotes a tracking coil, numeral 112 denotes a focusing coil, numerals 113 and 114 denote condenser lenses, numerals 115 and 116 denote photo-electric conversion elements, numeral 117 denotes a tracking control circuit, and numeral 118 denotes a focusing control circuit. Currents are supplied to the tracking coil 111 and the focusing coil 112 under the control of the control circuits 117 and 118 in accordance with signals detected by the photo-electric conversion elements 115 and 116 so that the objective lens is driven to carry out AT and AF. The photoelectric conversion elements 115 and 116 produce clock signals and reproduce signals. The optical card information recording and reproducing apparatus is constructed by the elements other than the optical card 101 and the motor 106 shown in Fig. 2.

A method for recording and reproducing information to and from the optical card by such an apparatus is now explained.

In the apparatus shown in Fig. 2, a light beam emitted from the light source 107 is collimated by the collimator lens 108 and it is split by the diffraction grating 119 into three beams at different angles with respect to the direction normal to the plane of the drawing. They are reflected by the beam splitter 109 and form three beam spots on the information record plane of the optical card 101 through the objective lens 110.

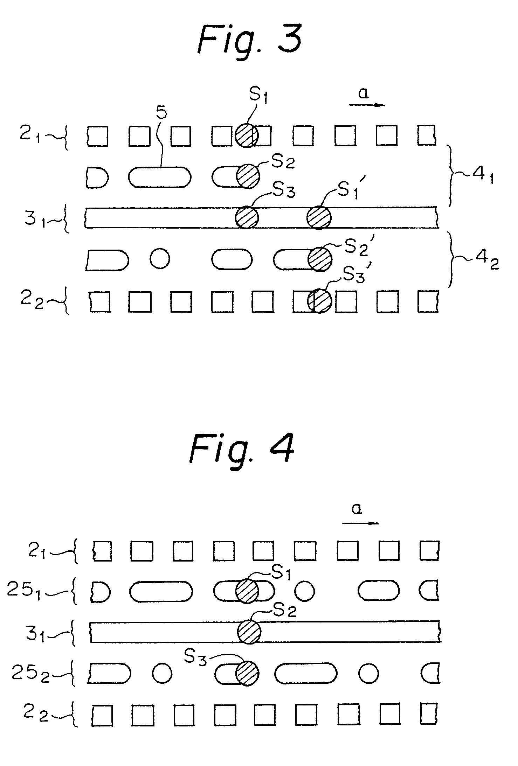

Fig. 3 shows a partial enlarged plan view of the information record plane of the optical card 101.

When information is to be recorded on the optical card 101, spots $S_1$, $S_2$ and $S_3$ are formed on the information record plane with the spot $S_1$ being on the clock track $2_1$ and the spot $S_3$ being on the tracking track $3_1$.

The spots $S_1 \sim S_3$ are scanned in a direction $\overline{a}$ by causing a relative displacement between the optical head, which forms the spots, and the optical card. A clock signal is reproduced from light reflected from the spot $S_1$. Light reflected from the spot $S_3$ is directed to the photo-electric conversion element 115 in the optical head, and a tracking signal is produced in the tracking control circuit 117 by a known method such as push-pull. The tracking coil 111 is energized in accordance with the tracking signal to drive the objective lens 110 horizontally. Thus, the spots $S_1$, $S_2$ and $S_3$ are all moved in a direction normal to the scan direction to perform auto-tracking. Thus, record bits 5 are recorded on the record area $4_1$ by the spot $S_2$ along the tracking track $S_3$. When information is to be recorded on the record area $4_2$, the spots $S_1'$, $S_2'$ and $S_3$ are irradiated as shown and a clock signal is reproduced from the clock track $2_2$ by the spot

$S_3$' and a tracking signal is reproduced from the tracking track $3_1$ by the spot $S_1$'. Information is recorded by the spot $S_2$' while the auto-tracking is carried out. In this manner, information can be recorded on all areas of the record area.

Fig. 4 shows a partial enlarged plan view of the information record plane of the optical card 101.

When information recorded on the optical card is to be reproduced, the intensity of the light beam spot to be irradiated to the record bits need not be so high. Therefore, two lines may be simultaneously read. Namely, the spots $S_1$, $S_2$ and $S_3$ are irradiated to the record track $25_1$, tracking track $3_1$ and record track $25_2$. Those spots are scanned in the direction a as in the recording mode. Since no clocking is required for reproduction, no spot is irradiated to the clock track. A tracking signal is reproduced from light reflected from the spot $S_2$ and also signals are reproduced from light reflected from the spots $S_1$ and $S_3$.

In recording and reproducing information by light beam, it is necessary to position the light beam spot relative to the predetermined tracking track to effect the AT control (AT pull-in of the light beam spot). In the AT pull-in of the light beam, the optical head is moved to the vicinity of the target track, the light beam spot is formed on the record medium surface, and after sufficient in-focus state has been attained, the AT servo system is activated to carry out the AT pull-in for the target track.

As shown in Fig. 3, tracks are formed on the optical card or record medium parallel to the scan direction of the light beam spot (direction a shown in Fig. 3).

Accordingly, if the light beam spot is formed in the AT pull-in mode at an intermediate point between the tracks on the record medium, AT pull-in is not attained.

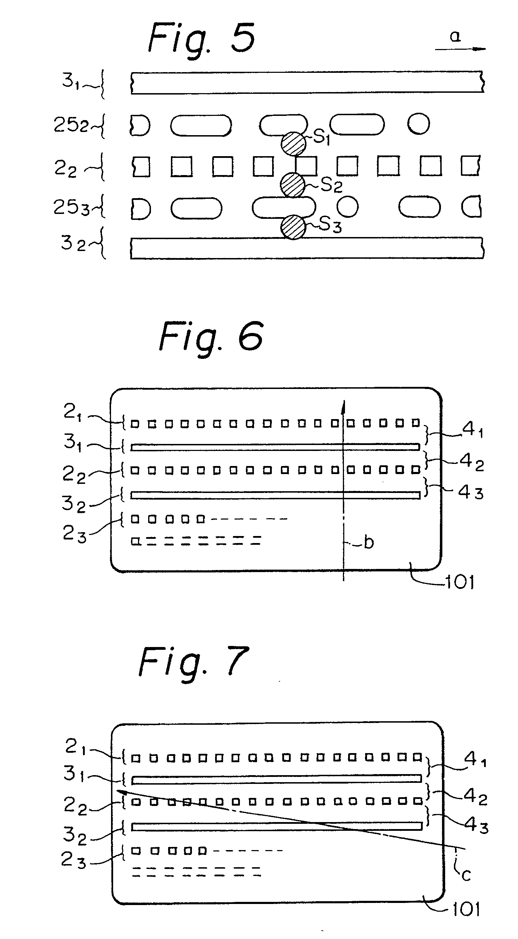

In the prior art optical card recording and reproducing apparatus, the entire optical head is moved orthogonally to the tracks of the optical card (direction b in Fig. 6) and when the tracking light beam spot reaches the position corresponding to the desired tracking track, the AT control is started so that the AT pull-in is attained for the target track.

However, when the optical head is to be moved to cause the light beam spot to move across the tracks, if the actuator is rapidly driven, the light beam spot tends to overshoot the desired tracking track. AT pull-in is not attained immediately for the target track. In order to accommodate AT pull-in it would be necessary then to slow down the drive speed of the optical head. Hence a long time would be required to attain AT pull-in. An alternative approach, that might be envisaged, is shown in Fig. 7. Here the tracking light beam spot is scanned obliquely (direction c) with respect to the direction of the tracking track $3_2$ so that the light beam spot crosses the tracking track and AT pull-in is carried out during this period.

However, this method would require a relatively long distance scan and again would require a long time to attain AT pull-in.

## SUMMARY OF THE INVENTION

The present invention is intended to provide an optical information recording and/or reproducing apparatus as a remedy to the problems previously encountered and accordingly it is intended to achieve more rapid AT pull-in.

According to a first aspect of the present invention there is provided an apparatus for recording and/ or reproducing optical information on an optical information recording medium having a plurality of tracks, said apparatus comprising:

a light source;

first optical means for converging light emitted from said light source to form one or more light spots on said recording medium;

second optical means for collecting light from said recording medium;

detecting means for receiving light collected by said second optical means, and for producing a tracking signal; and

control means for effecting a tracking control of said one or more light spots relative to said tracks in response to said tracking signal produced by said detecting means; which apparatus is characterised by:

vibration means for causing said one or more light spots or the recording medium to vibrate relative to one another in a direction traversing the direction of extent of said tracks;

discrimination means, responsive to said tracking signal, for discriminating whether or not said one or more light spots is within a control area for which the tracking control loop, provided by said second optical means, said detecting means, said control means and said first optical means, is responsive; and

selection means, responsive to said discrimination means, for engaging said control means and said vibration means selectively in dependance upon the result of discrimination.

According to a second aspect of the present invention there is provided a method for controlling the position of a beam spot in an apparatus for recording and/or reproducing optical information on an optical information recording medium having a plurality of tracks, said method comprising:

engaging and operating a tracking servo-control loop for controlling the lateral position of said beam spot when the beam spot is positioned within a predetermdined area of the medium;

which method is characterized by:

disengaging said tracking servo-control loop when the beam spot is positioned outside said predetermined area;

vibrating said beam spot or medium to cause a relative vibrational displacement therebetween in a direction traversing the direction of extent of said tracks to bring said beam spot again within said predetermined area;

and thereupon re-engaging and operating said servo-control loop to reposition the beam spot relative to said tracks.

Thus in the event that the or each of the one or more light spots should irradiate an area of the medium that is outside AT pull-in servo control, vibration is caused and when as a result the or each light spot is again brought within the control area, AT pull-in servo control is then re-engaged.

## BRIEF DESCRIPTION OF THE DRAWINGS

Fig. 1 shows a plan view of an optical card,

Fig. 2 shows a known configuration of an optical card recording and reproducing apparatus,

Fig. 3, 4, 5, 10, 11, 13 and 14 show partial enlarged plan views of optical card information record planes,

Figs. 6 and 7 illustrate possible approaches to AT pull-in,

Fig. 8 shows a block diagram of an AT pull-in control unit of the present apparatus,

Fig. 9 shows a front view of a photo-electric conversion element,

Fig. 12 illustrates AT pull-in in the present invention, and

Figs. 15 and 16 show other embodiments of an AT pull-in control unit of the present invention.

## DESCRIPTION OF THE PREFERRED EMBODIMENTS

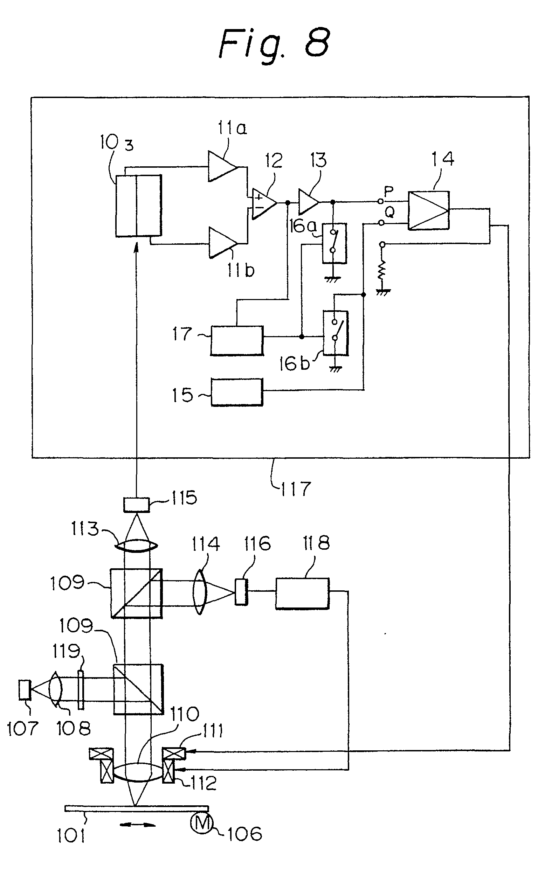

Fig. 8 shows a block diagram of an AT pull-in control unit of an optical card recording and reproducing apparatus, in accordance with one embodiment of the optical information recording and reproducing apparatus of the present invention.

The apparatus of the present embodiment has an overall configuration similar to that shown in Fig. 2. A photo-electric conversion element 115 has three two-split sensors corresponding to three light beams, as described in connection with Fig. 2.

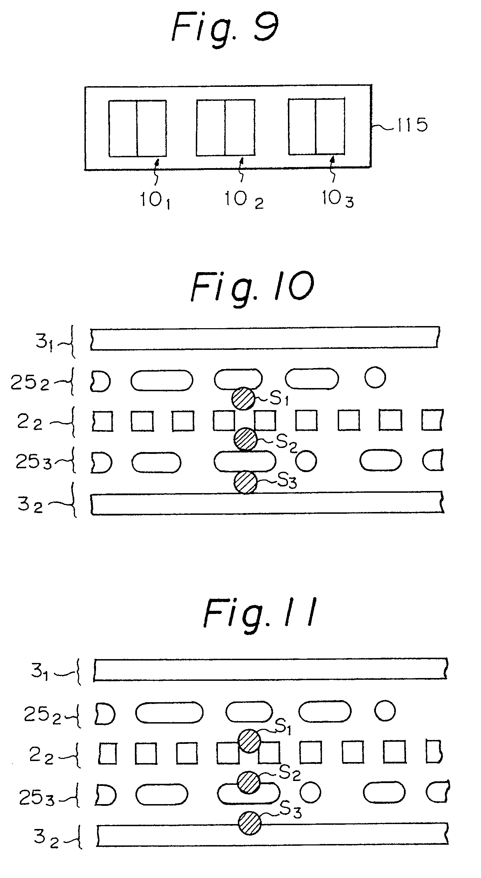

Fig. 9 shows a front view of the photoelectric conversion element 115. Numerals $10_1 \sim 10_3$ denote two-split sensors each having two sense areas.

Fig. 8 shows only one of the three two-split sensors of the photo-electric conversion element 115. In order to attain the information record status shown by the light beam spots $S_1 \sim S_3$ in Fig. 3, the spot $S_3$ is used for tracking and the spot $S_3$ is focused onto the two-split sensor $10_3$.

Outputs from the sense areas of the two-split sensor $10_3$ are supplied to sensor amplifiers 11a and 11b, respectively, and outputs from the amplifiers are supplied to an operational circuit 12, which produces a differential signal of two inputs thereto. The output of the operational circuit 12 is supplied to a terminal P of a driver amplifier 14 through a buffer 13. Numeral 15 denotes a vibration voltage generation circuit, an output of which is applied to a terminal Q of the driver amplifier 14. One terminal of a switch 16a is connected to the buffer 13 and the terminal P and the other terminal of the switch 16a is grounded. Similarly, one terminal of a switch 16b is connected to the vibration voltage generation circuit 15 and the terminal Θ and the other terminal of the switch 16b is grounded. Numeral 17 denotes a control circuit which receives the output of the operational circuit 12. The control circuit 17 produced ON/OFF control signals for the switches 16a and 16b. The output of the driver amplifier 14 is supplied to a tracking coil 111. Numeral 110 denotes an objective lens.

The sensor amplifiers 11a and 11b, operational circuit 12, buffer 13 and driver amplifier 14 form a portion of the tracking control circuit 117 of Fig. 2.

In the present embodiment, the optical head is moved to the vicinity of the target track and the light beam spot is formed on the surface of the record medium. After sufficient in-focus state has been attained, electrical signals of an image of the light beam spot $S_3$ detected by the two-split sensor $10_3$ are supplied from the sensor amplifiers 11a and 11b to the operational amplifier 12 in which a differential signal is produced and it is supplied to the buffer 13. On the other hand, the vibration voltage generation circuit 15 generates a sawtooth wave or sine wave vibration voltage.

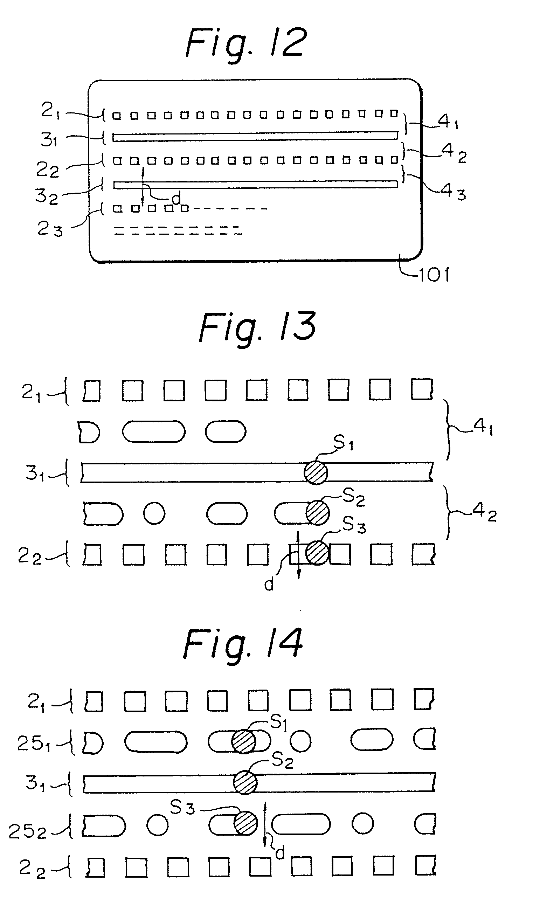

As shown in Fig. 10, when the light beam spot $S_3$ is at a position other than the tracking track $3_2$ of the information record medium, same amount of light is directed to each sense area of the two-split sensor $10_3$ and the sensor amplifiers 11a and 11b produce the same output and the output of the operational circuit 12 is zero. Accordingly, no input is applied to the control circuit 17. Thus, the control circuit 17 produces a signal to close (ON) the switch 16a and open (OFF) the switch 16b so that the switches assumes the positions shown in Fig. 8. (After the AT servo has been later turned on, the control circuit 17 does not produce a signal to reset the switches 16a and 16b even after the output of the operational circuit 12 has assumed zero.). Accordingly, no input is applied to the terminal P of the driver amplifier 14 and the vibration voltage is applied to the terminal Q. The voltage signal is converted by the driver amplifier to a current signal, which is supplied to the coil 111. Thus, the objective lens 110 is vibrated across the track. The direction d of vibration of the light beam spot $S_3$ is shown in Fig. 12. The amplitude of the vibration is preferably equal to a track pitch so that the spot $S_3$ moves across the target track $3_2$.

If the period of vibration is too short, the velocity of the light beam spot across the track is too fast to attain AT pull-in. Accordingly, it is chosen to be long enough to allow AT pull-in, depending here on the gain of the AT servo system. In the experience of the inventors, AT pull-in can be attained for a velocity of up to 5 μm/msec.

As the objective lens 110 starts to vibrate, the light beam spot $S_3$ is moved across the tracking track $3_2$ as shown in Fig. 11. At this time, the amounts of light directed to the sense areas of the two-split sensor $10_3$ are different. Accordingly the outputs of the sensor amplifiers 11a and 11b are different and the operational circuit 12 produces a non-zero output. This output is supplied to the control circuit 17 which compares it with a predetermined threshold level. The control circuit 17 produces a signal to turn off the switch 16a and turn on the switch 16b. As a result, the input to the terminal Q of the driver amplifier 14 is terminated and the output of the operational circuit 12 is supplied to the driver amplifier 14 through the buffer 13 and the terminal P.

In this manner, the AT servo control is effected for the target track and AT pull-in is attained.

Under this condition, the record medium is moved relative to the optical head along the track while the AT servo system is operated to record, reproduce and/or erase information.

In the above embodiment, the light beam spot $S_3$ is used for tracking. When the light beam $S_1'$ (shown in Fig. 3) or the light beam $S_2$ (shown in Fig. 4) is used for tracking, the AT pull-in may be similarly attained by utilizing the signals derived from the two-split sensors $10_1$ and $10_2$.

In the above embodiment, the AT pull-in is attained by utilizing the tracking track. Alternatively, the AT pull-in may be attained by utilizing another track available for tracking, that is, the clock track $2_2$ of the information record medium as shown in Fig. 13. When information is to be reproduced, the AT pull-in may be attained by utilizing the record area $25_2$ formed on the information record medium as shown in Fig. 14.

In the above embodiment, the objective lens 110 is vibrated by utilizing the tracking coil 111. Alternatively, a separate vibration coil may may be provided to vibrate the objective lens. The vibration and drive means for the objective lens is not limited to the electromagnetic means but it may be other means such as a piezoelectric element.

To summarise, the optical head is driven to the vicinity of the target track, the light beam spot is formed on the surface of the record medium and after sufficient in-focus state has been attained, the tracking servo system is activated. If the light beam spot is outside the control area of the tracking servo loop, loop control is disengaged temporarily whilst the light beam spot is vibrated across the track at an amplitude equal to the track pitch. When the light beam spot is within the control area of the loop, the loop is re-activated. In this manner, exact and rapid AT pull-in is attained.

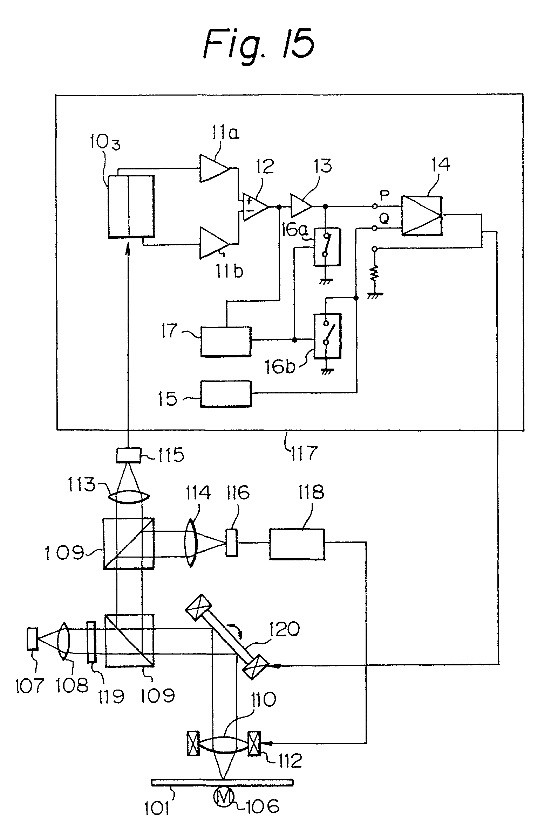

In the above embodiment, the light beam spot is vibrated by utilizing the objective lens 110. Alternatively, a rotating mirror 120 may be used to vibrate the light beam spot, as shown in Fig. 15. In this arrangement, crosstalk is prevented and a stable servo system is provided.

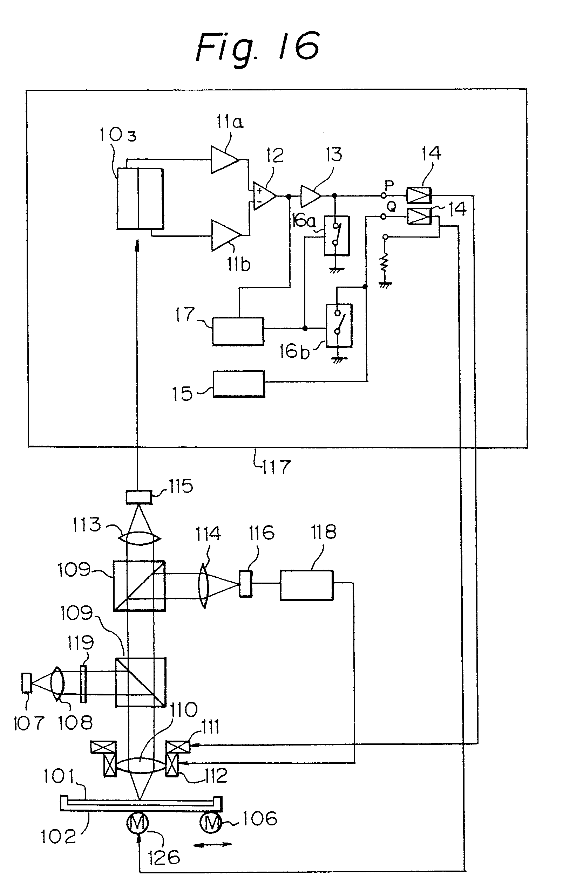

In the above embodiment, the AT pull-in is attained by vibrating the light beam spot. Alternatively, the optical card 101 may be vibrated by using a motor 126 as shown in Fig. 16. In this case, the optical card 101 is carried by a shuttle 102 which is vibrated by the motor 126.

In the above embodiment, AT pull-in is attained by using the control system. The control system may be used also to compensate for off-tracking.

If the apparatus is jogged and the light beam spot caused to move off-track, for example as shown in Fig. 10, compensation for this can be provided. In this case, since there is no change in the signals derived from the three two-split sensors $10_1$, $10_2$ and $10_3$, it may be detected and the control system may cause the light beam spot to vibrate so that the light beam spot is driven back to the tracking control area.

In the above embodiment, a write-after-read type optical card is used as an information record medium. Alternatively, other record media having linear tracks available for tracking arranged in parallel such as read-only or rewritable optical card may be used.

## Claims

1. An apparatus (fig. 8; fig. 15; fig. 16) for recording and/or reproducing optical information on an optical information recording medium (101) having a plurality of tracks (fig. 1: 21, 22, 23, 31, 32, 41, 42, 43), said apparatus comprising:

   a light source (107);

   first optical means (108, 119, 109, 110) for converging light emitted from said light source (107) to form one or more light spots ($S_1, S_2, S_3$) on said recording medium (101);

second optical means (110, 109, 113) for collecting light from said recording medium (101);

detecting means (115, 117), for receiving light collected by said second optical means (110, 109, 113), and for producing a tracking signal; and

control means (111; 120; 111) for effecting a tracking control of said one or more light spots $(S_1, S_2, S_3)$ relative to said tracks (21,22,23,31,32,41, 42,43) in response to said tracking signal produced by said detecting means (115, 117);

which apparatus is characterised by:

vibration means (15, 14, 111; 15,14,120; 15,14,126) for causing said one or more light spots $(S_1,S_2,S_3)$ or the recording medium (101) to vibrate relative to one another in a direction (b) traversing the direction (a) of extent of said tracks (21, 22, 23, 31, 32, 41, 42, 43);

discrimination means (17), responsive to said tracking signal, for discriminating whether or not said one or more light spots $(S_1,S_2,S_3)$ is within a control area for which the tracking control loop, provided by said second optical means (110,109,113), said detecting means (115,117), said control means (111;120;111) and said first optical means (108,119,109,111), is responsive; and

selection means (16a, 16b), responsive to said discrimination means (17), for engaging said control means (111; 120; 111) and said vibration means (15, 14,111; 15,14,120; 15,14,126) selectively in dependance upon the result of discrimination.

2. Apparatus (fig. 8) as claimed in claim 1, wherein:
said first optical means includes an objective lens (110) that is movable under control of said vibration means (15,14,111) to vibrate said one or more light spots $(S_1, S_2, S_3)$ relative to the recording medium (101) in said traversing direction.

3. Apparatus (fig. 15), as claimed in claim 1, wherein:
said first optical means includes a mirror (120) that is movable under control of said vibration means (15,14,111) to vibrate said one or more light spots $(S_1,S_2,S_3)$ relative to the recording medium (101) in said traversing direction.

4. Apparatus (fig. 16), as claimed in claim 1, including motor means (126) for vibrating said recording medium (101) relative to said one or more light spots $(S_1,S_2,S_3)$ in said traversing direction.

5. Apparatus, as claimed in any one of the preceding claims, wherein said vibration means (15, 14,111; 15,14,120; 15,14,126) is such as to cause vibration at an amplitude, measured in a direction normal to the direction of extent of said tracks (21,22,23, 31,32,41, 42, 43) substantially equal to track pitch.

6. A method for controlling the position of a beam spot $(S_1,S_2,S_3)$ in an apparatus for recording and/or reproducing optical information on an optical information recording medium (101) having a plurality of tracks (21,22,23, 31,32, 41, 42,43), said method comprising:

engaging and operating a tracking servo-control loop (110, 109, 113, 115, 117, 111) for controlling the lateral position of said beam spot $(S_1,S_2,S_3)$ when the beam spot $(S_1,S_2,S_3)$ is positioned within a predetermined area of the medium (101);

which method is characterised by:

vibrating said beam spot or medium to cause a relative vibrational displacement therebetween in a direction that said beam spot traverses said tracks when said beam spot is positioned outside said predetermined area;

detecting whether said beam spot is positioned within said predetermined area or not by said vibrational displacement;

and engaging and operating said tracking servo-control loop in accordance with the result of said detection.

**Revendications**

1. Appareil (figure 8 ; figure 15 ; figure 16) destiné à enregistrer et/ou reproduire une information optique sur un support (101) d'enregistrement d'informations optiques comportant plusieurs pistes (figure 1 : 21, 22, 23, 31, 32, 41, 42, 43), ledit appareil comportant :
une source (107) de lumière ;
des premiers moyens optiques (108, 119, 109, 110) destinés à faire converger la lumière émise par ladite source (107) de lumière pour former un ou plusieurs points lumineux $(S_1, S_2, S_3)$ sur ledit support (101) d'enregistrement ;
des seconds moyens optiques (110, 109, 113) destinés à collecter de la lumière provenant dudit support (101) d'enregistrement ;

des moyens de détection (115, 117) destinés à recevoir la lumière collectée par lesdits seconds moyens optiques (110, 109, 113) et à produire un signal de poursuite ; et

des moyens de commande (111 : 120 : 111) destinés à effectuer une commande de poursuite dudit ou desdits points lumineux (S₁, S₂, S₃) par rapport auxdites pistes (21, 22, 23, 31, 32, 41, 42, 43) en réponse audit signal de poursuite produit par lesdits moyens de détection (115, 117) ;

lequel appareil est caractérisé par :

des moyens de vibration (15, 14, 111 ; 15, 14, 120 ; 15, 14, 126) destinés à amener ledit ou lesdits points lumineux (S₁, S₂, S₃) ou le support (101) d'enregistrement à vibrer mutuellement dans une direction (b) transversale à la direction (a) de l'étendue desdites pistes (21, 22, 23, 31, 32, 41, 42, 43) ;

des moyens de discrimination (17) qui, en réponse audit signal de poursuite, sont destinés à déterminer si ledit ou lesdits points lumineux (S₁, S₂, S₃) se trouvent ou non dans une zone de commande pour laquelle la boucle de commande de poursuite, constituée par lesdits seconds moyens optiques (110, 109, 113), lesdits moyens de détection (115, 117), lesdits moyens de commande (111 ; 120 ; 111) et lesdits premiers moyens optiques (108, 119, 109, 111), réagit ; et

des moyens de sélection (16a, 16b) qui, en réponse auxdits moyens de discrimination (17), sont destinés à engager lesdits moyens de commande (111 ; 120 ; 111) et lesdits moyens de vibration (15, 14, 111 ; 15, 14, 120 ; 15, 14, 126) sélectivement en fonction du résultat de la discrimination.

2. Appareil (figure 8) selon la revendication 1, dans lequel :

lesdits premiers moyens optiques comprennent un objectif (110) qui est mobile sous la commande desdits moyens de vibration (15, 14, 111) pour faire vibrer ledit ou lesdits points lumineux (S₁, S₂, S₃) par rapport au support (101) d'enregistrement dans ladite direction transversale.

3. Appareil (figure 15) selon la revendication 1, dans lequel :

lesdits premiers moyens optiques comprennent un miroir (120) qui est mobile sous la commande desdits moyens de vibration (15, 14, 111) pour faire vibrer ledit ou lesdits points lumineux (S₁, S₂, S₃) par rapport audit support (101) d'enregistrement dans ladite direction transversale.

4. Appareil (figure 16) selon la revendication 1, comprenant des moyens à moteur (126) destinés à faire vibrer ledit support (101) d'enregistrement par rapport audit ou auxdits points lumineux (S₁, S₂, S₃) dans ladite direction transversale.

5. Appareil selon l'une quelconque des revendications précédentes, dans lequel lesdits moyens de vibration (15, 14, 111 ; 15, 14, 120 ; 15, 14, 126) sont tels qu'ils provoquent une vibration à une amplitude, mesurée dans une direction normale à la direction de l'étendue desdites pistes (21, 22, 23, 31, 32, 41, 42, 43), sensiblement égale au pas des pistes.

6. Procédé pour commander la position d'un point de faisceau (S₁, S₂, S₃) dans un appareil pour l'enregistrement et/ou la reproduction d'une information optique sur un support (101) d'enregistrement d'informations optiques comportant plusieurs pistes (21, 22, 23; 31, 32, 41, 42, 43), ledit procédé consistant :

à engager et mettre en oeuvre une boucle de servo-commande de poursuite (110, 109, 113, 115, 117, 111) pour commander la position latérale dudit point de faisceau (S₁, S₂, S₃) lorsque le point de faisceau (S₁, S₂, S₃) est positionné dans une zone prédéterminée du support (101) ;

lequel procédé est caractérisé en ce qu'il consiste :

à faire vibrer ledit point de faisceau ou ledit support pour provoquer un déplacement vibratoire relatif entre eux dans une direction sur laquelle ledit point de faisceau traverse lesdites pistes lorsque ledit point de faisceau est positionné en dehors de ladite zone prédéterminée ;

à détecter si ledit point de faisceau est positionné dans ladite zone prédéterminée ou non par ledit déplacement vibratoire ; et

à engager et mettre en oeuvre ladite boucle de servo-commande de poursuite en fonction du résultat de ladite détection.

**Patentansprüche**

1. Vorrichtung (Fig. 8; Fig. 15; Fig. 16) zur Aufzeichnung und/oder Wiedergabe optischer Information auf ein optisches Informationsaufzeichnungsmaterial (101) mit einer Vielzahl von Spuren (Fig. 1:21,22,23,31,32,41,42,43), wobei die Vorrichtung Folgendes umfasst:

eine Lichtquelle (107);

eine esrste Vorrichtung (108, 119, 109, 110), die das von der Lichtquelle (107) ausgesendete Licht zur Bildung zumindest eines Lichtpunktes (S1, S2, S3) auf dem Aufzeichnungsmaterial (101) konvergiert;

eine zweite optische Vorrichtung (110, 109, 113), die das Licht von dem Aufzeichnungsmaterial (101) sammelt;

eine Meßvorrichtung (115, 117), die das durch die zweite optische Vorrichtung (110,109, 113) gesammelte Licht empfängt und ein Spurfolgesignal erzeugt; und

eine Regelvorrichtung (111; 120; 111), die eine Spurfolgeregelung zumindest eines Lichtpunktes (S1, S2, S3) gegenüber den Spuren (21, 22, 23, 31, 32, 41, 42, 43) in Antwort auf das durch die Meßvorrichtung (115, 117) erzeugte Spurfolgesignal bewirkt; wobei die Vorrichtung **gekennzeichnet** ist **durch**

eine Vibratorvorrichtung (15, 14, 111; 15, 14; 15, 14, 120; 15, 14, 126), die den zumindest einen Lichtpunkt (S1,S2,S3) oder das Aufzeichnungsmaterial (101) in einer die Erstreckungsrichtung (a) der Spuren (21, 22, 23, 31, 32, 41, 42, 43) kreuzenden Richtung (b) in Relativschwingung zueinander versetzt;

eine auf das Spurfolgesignal ansprechende Unterscheidungseinrichtung (17), die unterscheidet, ob der zumindest eine Lichtpunkt (21, 22, 23, 31, 32, 41, 42, 43) innerhalb eines Regelbereiches ist oder nicht, bei dem der Spurfolgeregelkreis anspricht, der durch die zweite optische Vorrichtung (110, 109, 113), die Meßvorrichtung (115, 117), die Regelvorrichtung (111; 120; 111) und die erste optische Vorrichtung (108, 119, 109, 111) gebildet ist; und

eine auf die Unterscheidungseinrichtung (17) ansprechende Wahleinrichtung (16a, 16b), die selektiv in Abhängigkeit vom Unterscheidungsergebnis die Regelvorrichtung (111; 120; 111) und die Vibratorvorrichtung (15, 14. 111; 15, 14, 120; 15, 14, 126) einschaltet.

2. Vorrichtung (Fig. 8) nach Anspruch 1 **dadurch gekennzeichnet, daß** die erste optische Vorrichtung eine optische Linse (110) umfasst, die durch die Vibratorvorrichtung (15, 14, 111) geregelt bewegbar ist, um den zumindest einen Lichtpunkt (S1, S2, S3) gegenüber dem Auf-zeichnungsmaterial in der kreuzenden Rich-tung (b) in Relativschwingung zu versetzen.

3. Vorrichtung (Fig. 15) nach Anspruch 1, **dadurch gekennzeichnet, daß** die erste optische Vorrichtung einen Spiegel (120) umfasst, der durch die Vibratorvorrichtung (15, 14, 111) geregelt bewegbar ist, um den zumindest einen Lichtpunkt (S1, S2, S3) gegenüber dem Aufzeichnungsmaterial (101) in der kreuzenden Richtung in Relativschwingung zu versetzen.

4. Vorrichtung (Fig. 16) nach Anspruch 1 **gekennzeichnet durch** eine Motorunterstützung (126), die das Aufzeichnungsmaterial (101) gegenüber dem zumindest einen Lichtpunkt (S1, S2, S3) in der kreuzenden Richtung in Relativschwingung versetzt.

5. Vorrichtung nach einem der vorangehenden Ansprüche, **dadurch gekennzeichnet, daß** die Vibratorvorrichtung (15, 14, 111; 15, 14, 120; 15, 14, 126) derart ist, daß die Schwingung mit einer Amplitude erfolgt, die in eine Normalrichtung zur Erstreckungsrichtung der Spuren gemessen ist (21, 22, 23, 31, 32, 41, 42, 43) und im Wesentlichen gleich dem Spurabstand ist.

6. Verfahren zur Lageregelung eines Lichtpunktes (S1, S2, S3) in einer Vorrichtung zur Aufzeichnung und/oder Wiedergabe optischer Informa-tion auf einem optischen Informationsaufzei-chungsmaterial (101) mit einer Vielzahl von Spuren (21, 22,23,31,32,41,42,43), wobei das Verfahren wie folgt abläuft

Einschalten und Betreiben eines Spurfolgeregelkreises (110, 109, 113, 115, 117, 111), der den Seitenversatz des Lichtpunkts (S1, S2, S3) regelt, wenn sich der Lichtpunkt (S1, S2, S3) innerhalb eines vorbestimmten Bereiches des Materials (101) befindet; wobei das Verfahren **gekennzeichnet** ist, **durch**

Abschalten des Spurfolgeregelkreises (110, 109, 113, 115, 117, 111), wenn sich der Lichtpunkt außerhalb des vorbestimmten Bereiches befindet;

Hervorrufen von Schwingungen des Lichtpunktes (S1,S2, S3) oder des Materials (101), damit zwischen diesen eine Relativschwingungsversetzung in eine die Erstreckungsrichtung (a) der Spuren (21, 22, 23, 31, 32, 41, 42, 43,) kreuzende Richtung (b) veranlasst wird, um den Lichtpunkt (S1, S2, S3) wieder in den vorbestimmten Bereich zu bringen; und

darauffolgendes Wiedereinschalten und Betreiben des Spurfolgeregelkreises (110, 109, 113, 115, 117, 111), um den Lichtpunkt (S1, S2, S3) relativ zu den Spuren (21, 22, 23, 31, 32, 41, 42, 43) wieder zu positionieren.

## Fig. 1

## Fig. 2

# Fig. 3

# Fig. 4

# Fig. 5

$a$

$3_1$

$252$  $S_1$

$2_2$  $S_2$

$253$

$3_2$  $S_3$

# Fig. 6

$2_1$  $4_1$

$3_1$

$2_2$  $4_2$

$3_2$  $4_3$

$2_3$

$b$

101

# Fig. 7

$2_1$  $4_1$

$3_1$

$2_2$  $4_2$

$3_2$  $4_3$

$2_3$

$c$

101

# Fig. 8

# Fig. 9

$10_1$  $10_2$  $10_3$  $115$

# Fig. 10

$3_1$
$25_2$
$2_2$
$25_3$
$3_2$

$S_1$
$S_2$
$S_3$

# Fig. 11

$3_1$
$25_2$
$2_2$
$25_3$
$3_2$

$S_1$
$S_2$
$S_3$

# Fig. 12

# Fig. 13

# Fig. 14

# Fig. 15

# Fig. 16